# EUROPEAN PATENT SPECIFICATION

(11) **EP 3 948 205 B1**
(45) Date of publication and mention of the grant of the patent: **04.11.2026**
(21) Application number: 20791553.9
(22) Date of filing: 15.04.2020
(51) Int. Cl.: G01M 11/08, G01D 5/353, G01D 5/26, G01L 1/24, G01K 11/32, G01M 11/00

(54) **CALCULATION OF DISTRIBUTED BIREFRINGENCE AND POLARIZATION MODE DISPERSION FROM OPTICAL FREQUENCY DOMAIN REFLECTOMETRY**
BERECHNUNG VON VERTEILTER DOPPELBRECHUNG UND POLARISATIONSMODENDISPERSION AUS OPTISCHER FREQUENZBEREICHSREFLEKTOMETRIE
CALCUL DE BIRÉFRINGENCE DISTRIBUÉE ET DE DISPERSION DE MODE DE POLARISATION À PARTIR D'UNE RÉFLECTOMÉTRIE DE DOMAINE DE FRÉQUENCE OPTIQUE

(30) Priority: 15.04.2019 US 201962833985 P
(43) Date of publication of application: 09.02.2022
(73) Proprietor: Luna Innovations Incorporated, Roanoke, VA 24011 (US)
(72) Inventor: KREGER, Stephen T., Roanoke, VA 24011 (US); TEMPLETON, Emily, E. H., Roanoke, VA 24011 (US); KOMINSKY, Daniel, Roanoke, VA 24011 (US); TEMPLETON, Brian, Roanoke, VA 24011 (US)
(74) Representative: D Young & Co LLP
(86) International application number: PCT/US2020/028204
(87) International publication number: WO 2020/214637

(56) References cited:
- US-A1- 2006 204 165
- US-A1- 2008 212 917
- US-A1- 2015 263 804
- US-A1- 2016 258 839
- US-A1- 2017 307 474
- US-B1- 6 856 400
- CHRISTIAN DORIZE ET AL: "Enhancing the performance of coherent OTDR systems with polarization diversity complementary codes", OPTICS EXPRESS, vol. 26, no. 10, 4 May 2018 (2018-05-04), pages 12878, XP055542643, DOI: 10.1364/OE.26.012878
- ZHOU DA-PENG ET AL: "Distributed group birefringence measurement in a polarization-maintaining fiber using optical frequency-domain reflectometry", OPTICS COMMUNICATIONS, vol. 345, 1 June 2015 (2015-06-01), AMSTERDAM, NL, pages 62 - 66, XP093354219, ISSN: 0030-4018, Retrieved from the Internet <URL:https://pdf.sciencedirectassets.com/271557/1-s2.0-S0030401815X00046/1-s2.0-S003040181500084X/main.pdf?hash=ba445bdb18fde9d954c3920ec53b5511695a60fd30e4b8a529400189a0e8b2e8&host=68042c943591013ac2b2430a89b270f6af2c76d8dfd086a07176afe7c76c2c61&pii=S003040181500084X&tid=spdf-807e5a39-0b4e-4559-bdf7-29d> DOI: 10.1016/j.optcom.2015.01.071

## Description

### PRIORITY APPLICATION

This application claims priority from U.S. provisional patent application serial number 62/833,985, filed on 15 April 2019.

### TECHNICAL FIELD

The technical field relates to optical measurements, and more particularly, to determining birefringence of a waveguide such as an optical fiber or other optical device.

### OVERVIEW

An Optical Frequency Domain Reflectometry (OFDR) instrument may be used to characterize an optical fiber's distributed Rayleigh scatter reflection profile with high spatial resolution and high sensitivity in a single laser optical frequency sweep. The spatial sample spacing of an OFDR instrument is inversely proportional to the swept range of the coherent optical source. For example, a popular commercial reflectometer (Luna Optical Backscatter Reflectometer 4600) can scan over an optical frequency range of 10 THz, yielding a sampling resolution in the optical time delay domain of 0.1 ps, equivalent to 0.01 mm of length in optical fiber in reflection, over a fiber length range of 30 m. The same instrument can also scan a 2000 m distance range in optical fiber with a 0.1 THz optical frequency swept range, producing a spatial sample spacing of 1 mm. In both scan modes, the instrument noise floor is more than 18 dB below the Rayleigh scatter reflection level for telecom grade optical fiber. The ability to characterize fiber Rayleigh scatter with high spatial resolution allows for the computation of distributed insertion loss along the fiber path.

In OFDR, light reflecting from the device under test interferes with light in a reference path. Consider the interference equation that describes the optical power P at a detector as a function of the tunable light source with optical frequency v: $P \left(υ\right) ∝ \left|{A}_{Ref}\right| + \left|{A}_{Test}\right| + 2 \sqrt{\left|{A}_{Ref}\right| \left|{A}_{Test}\right|} cos \left(2πvτ\right)$ (1) In the above equation, A_{Ref} is the amplitude of the light transmitted in the reference path of the interferometer, A_{Test} is the amplitude of the light reflected along the sensor fiber, and τ is the time-of-flight delay difference between the light in the reference and test paths. If the detector power is sampled in equal increments of optical frequency, then a Fourier Transform may be used to convert interference data collected as a function of optical frequency v (henceforth referred to as the spectral domain) to data spaced in equal increments of time delay τ (henceforth referred to as the time delay domain). The time delay τ is related to distance L along the test path by the waveguide group index of refraction n, where c is the speed of light: $τ = \frac{2 nL}{c}$ (2)

By segmenting a section of the Rayleigh scatter profile for the waveguide in the time delay domain and performing an inverse Fourier Transform, an OFDR instrument can also determine the optical spectral reflection profile for that fiber segment. The waveguide segment spectral profile can be compared to a baseline state segment profile to compute a spectral shift, which may be used to compute changes in the fiber strain and temperature state with millimeter spatial resolution.

The fiber Rayleigh scatter time delay domain and spectral domain patterns recorded by an OFDR instrument also can be used to compute the fiber birefringence distribution, as described for example in U.S. patent 7,330,245. In a birefringent material, light in different polarization states experiences different group indices of refraction, *n.* Birefringence (Δ*n_{B}*) is the difference in refractive index of those states: $Δ {n}_{B} = {n}_{s} - {n}_{f} ,$ (3) where *nₛ* and *n_{f}* are the group refractive indices for light polarized along the slow and fast propagation axes, respectively. By convention *nₛ > n_{f},* which means for a fixed length of fiber, reflections from light polarized along the slow axis return after reflections from light polarized along the fast axis.

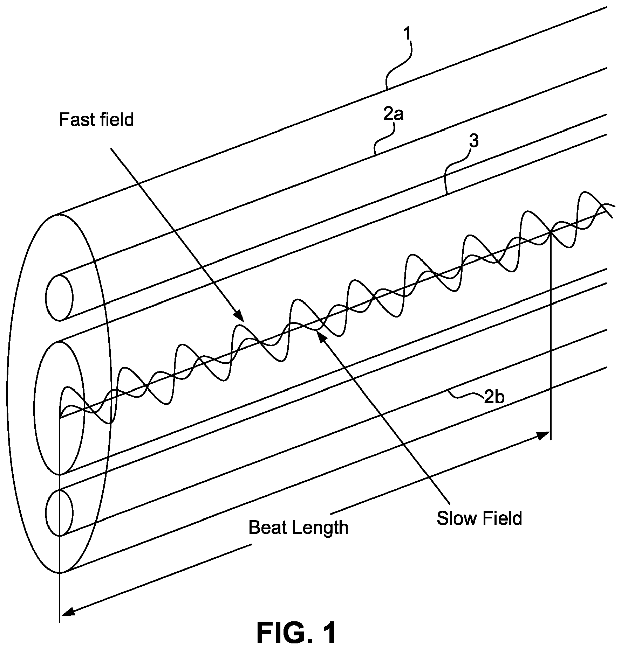

Figure 1 depicts a cross section of a type of Polarization Maintaining (PM) fiber, in which stress rods manufactured in the fiber produce asymmetric stress in the fiber core, causing light polarized in the plane of the stress rods and light polarized perpendicular to that plane to experience a different effective index of refraction. PM fiber is designed to create sufficient birefringence so that light polarized along the fast axis and the slow axis shown in Figure 1 separate in delay enough that after a short propagation distance, the light in the two polarization states do not strongly interact. In this case, light in the two polarization states is considered to propagate in separate polarization modes. However, while PM fiber is an example of a birefringent waveguide, not all instances of birefringence, particularly when the birefringence is weak and spatially localized, result in light propagation in different modes, and thus measurements of birefringence in PM fiber are a non-limiting example of a birefringence measurement.

In U.S. 7,330,245, the polarization state of light input to a fiber under test is adjusted to equally populate both fast and slow states in the fiber under test. A segment of the birefringent fiber's Rayleigh scatter signature is measured in the time delay domain, and the spectrum for that segment is computed via a fast Fourier transform (FFT). An autocorrelation performed on the scatter signature spectral data results in a central peak at zero with sideband peaks. The spectral optical frequency difference Δ*ν*_{B} between the side band peaks and the central peak is proportional to the segment birefringence: $\frac{Δ {ν}_{B}}{ν} = \frac{Δ {n}_{B}}{n}$ (4)

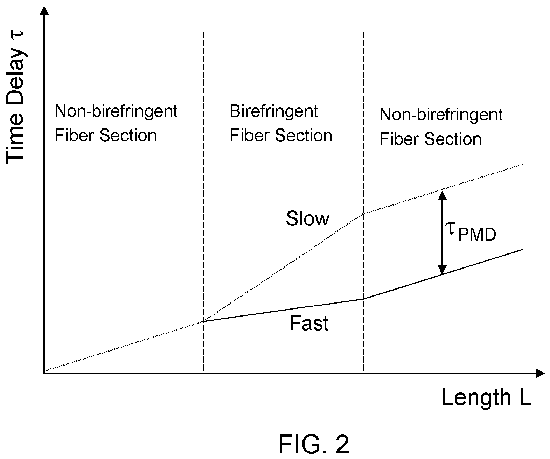

Figure 2 shows how the time delay τ can vary at the same fiber position for light polarized along the fast and the slow axes of the birefringent fiber. If an autocorrelation is performed on the time delay domain Rayleigh scatter data segment for a section of fiber that is birefringent, or after a section that is birefringent, a similar central peak and sideband peak pattern is formed, and the time delay equivalent to the spatial separation is equal to the local Polarization Mode Dispersion (PMD). The time delay associated with PMD, denoted by τ_{PMD}, (which is also referred to as the Differential Group Delay (DGD)), is related to the fiber birefringence. For a segment of fiber of length L measured in reflection with constant birefringence Δ*n_{B},* τ_{PMD} is: ${τ}_{PMD} = \frac{2 Δ {n}_{B} L}{c}$ (5)

In addition, a distributed birefringence signal calculated from the spectral domain autocorrelation of the test fiber Rayleigh scatter can be combined with a spectral domain cross-correlation to simultaneously measure temperature and strain. See for example US 7,538,883.

What is needed is an approach to measure fiber birefringence amplitude and orientation in a distributed fashion with high spatial resolution, fidelity, and sensitivity, without a requirement to actively align the polarization state of input light launched into the optical device under test.

Christian Dorize et al. (Christian Dorize et al.: "Enhancing the performance of coherent OTDR systems with polarization diversity complementary codes", Optics Express, vol. 26, no. 10, 4 May 2018 (2018-05-04), page 12878, XP055542643, DOI: 10.1364/OE.26.012878.) disclose periodically capturing an overall fiber Jones matrix estimate thanks to a novel probing technique using two mutually orthogonal complementary (Golay) pairs of binary sequences applied simultaneously in phase and quadrature on two orthogonal polarization states. A perfect channel response estimation of the sensor array is achieved, subject to conditions detailed in the paper, thus enhancing the sensitivity and bandwidth of coherent ø-OTDR systems. High sensitivity, linear response, and bandwidth coverage up to 18 kHz are demonstrated with a sensor array composed of 10 fiber Bragg gratings (FBGs).

US 2015/263804 A1 describes an optical frequency domain reflectometry (OFDR) system.

Zhou at al (Zhou Da-Peng at al.: "Distributed group birefringence measurement in a polarization-maintaining fiber using optical frequency-domain reflectometry", Optics Communications, vol. 345, pages 62-66, 1 June 2015) disclose use of optical frequency-domain reflectometry to measure distributed group birefringence along a section of polarization-maintaining fiber. Frequency dependence of the propagation constant difference along the fiber between the fast and slow modes is determined. The scanning frequency bandwidth influences the measurement of the phase modal birefringence and beat length.

### SUMMARY

The following presents a simplified summary of the innovation in order to provide a basic understanding of some aspects of the innovation. This summary is not an extensive overview of the innovation. It is not intended to identify key/critical elements of the innovation or to delineate the scope of the innovation. Its purpose is to present some concepts of the innovation in a simplified form as a prelude to the more detailed description that is presented later.

A first aspect of the disclosure is directed to an optical frequency domain reflectometry apparatus for determining birefringence for a waveguide segment at a particular location along the waveguide, as defined in appended claim 1.

A second aspect of the disclosure is directed to an optical frequency domain reflectometry method for determining a birefringence for a waveguide segment at a particular location along the waveguide, as defined in appended claim 7.

Examples described herein relating to determining polarization mode dispersion are outside the scope of the appended claims.

The technology described in this application improves OFDR-based measurements of birefringence in waveguides and better characterizes local birefringence. The polarization state of input light launched into an optical fiber from an OFDR instrument is manipulated, and polarization diverse detection is used by the OFDR instrument to capture the complete polarization response of the reflected Rayleigh scatter pattern from the fiber, without a requirement to align the input light launched into the waveguide into a particular state. The Rayleigh scatter is then represented by a 2x2 matrix obtained using two input light launched polarization states and two received polarization states from the waveguide under test. The spectral autocorrelation of a polarization state averaged Rayleigh scatter pattern generated from the 4 matrix elements reliably results in a center peak and side band pattern with consistently strong side bands, regardless of the birefringence axis orientation in the waveguide under test. The birefringence is determined by the side band separation. Alternatively, a single shifted correlation peak is obtained by rotating and separating the 2x2 spectral domain matrix into fast and slow eigenvectors, and cross correlating fast and slow eigenvector data. Because the single cross-correlation peak is stronger than the autocorrelation side bands, and there is no central peak to obscure a correlation peak with a small spectral shift, measurement of the waveguide's birefringence is achieved with improved fidelity and sensitivity. Additionally, the process of separating the fast and slow eigenvectors results in a measurement of the birefringence axis orientation. These improvements in distributed birefringence measurements have application in a wide range of distributed sensing capabilities, including improved ability to discriminate between temperature and strain, and the measurement of pressure, electrical current, bend curvature, and transverse strain sensing.

### BRIEF DESCRIPTION OF THE DRAWINGS

Figure 1 illustrates the structure of polarization maintaining optical fiber and the resulting slow and fast field response due to birefringence;
Figure 2 is a graph which shows the relationship between time-of-flight delay in an optical fiber and the fast and slow group index of refraction, and how birefringence leads to Polarization Mode Dispersion;
Figure 3 is an example of an OFDR instrument optical network for testing devices in reflection which launches two polarization states with a time delay in between to the Device Under Test;
Figure 4 illustrates the time delay domain windowing of the device response to obtain 4 transfer matrix elements for the optical network in Figure 3;
Figure 5 is an example of an OFDR instrument optical network for testing devices in reflection which launches a single but modifiable polarization state to the Device Under Test;
Figure 6 illustrates the time delay domain windowing of the device response to obtain 4 transfer matrix elements for the optical network in Figure 5;
Figure 7 is a flow chart illustrating example steps for determining birefringence at a particular location in the waveguide under test using an autocorrelation of the spectral response function generated from the 4 terms of the device transfer matrix;
Figure 8 is a flow chart illustrating more detailed but still example steps for determining the distributed birefringence of a waveguide using an autocorrelation of the spectral response function generated from the 4 terms of the device transfer matrix;
Figure 9 is a flow chart illustrating example steps for determining birefringence at a particular location in the waveguide under test using a cross-correlation of the spectral response functions generated from the fast and slow terms of the device transfer matrix;
Figure 10 is a flow chart illustrating more detailed but still example steps for determining the distributed birefringence of a waveguide using a cross-correlation of the spectral response functions generated from the fast and slow terms of the device transfer matrix;
Figure 11 illustrates the existence of substantially identical but shifted versions of the Rayleigh scatter reflection amplitude profile for a segment of the waveguide in the time delay domain and spectral domain;
Figure 12 shows examples of time delay domain and spectral domain autocorrelation side bands stemming from test waveguide birefringence;
Figure 13 shows an example OFDR instrument reflection amplitude vs. distance trace of a test device, with a PM fiber segment between 3.2 m and 13.8 m;
Figure 14 shows plots of example autocorrelation results for a 1x2 vector of the transfer matrix for the reflection spectrums of a segment of Rayleigh scatter from a birefringent waveguide for four values of rotation angle θ, which demonstrates the sensitivity of the side band strength to the rotaion angle;
Figure 15 shows example cross-correlation results for orthogonal 1x2 vectors of the transfer matrix for the reflection spectrums of a segment of Rayleigh scatter from a birefringent waveguide for four values of the rotation angle θ, which shows the sensitivity of the cross-correlation peak amplitude to the rotation angle;
Figure 16 shows the birefringence distribution for the PM fiber test device shown in Figure 13, as calculated from the optical frequency shift results for the transfer matrix averaged autocorrelation method and the orthogonal vector cross-correlation method.

### DETAILED DESCRIPTION

In the following description, for purposes of explanation, numerous specific details are set forth in order to provide a thorough understanding of the subject innovation. It may be evident, however, that the innovation can be practiced without these specific details. Certain illustrative aspects of the innovation are described herein in connection with the following description and the drawings. These aspects are indicative, however, of but a few of the various ways in which the principles of the innovation can be employed and the subject innovation is intended to include all such aspects and their equivalents. Other advantages and novel features of the innovation will become apparent from the following detailed description of the innovation when considered in conjunction with the drawings.

The description applies to optical waveguides. An example optical waveguide is an optical fiber. The following description refers to optical fibers for ease of description; however, it should be understood that this description applies to optical waveguides in general.

Instruments based on OFDR are very useful for a wide range of applications because of the capability to return reflection data with very high spatial resolution (e.g., 0.01 - 1 mm) over useful ranges in optical fiber (e.g., 30 - 2000 m) with a noise floor well below the fiber Rayleigh scatter level. Similar to instruments based on Optical Time Domain Reflectometry (OTDR) or Optical Coherence Domain Reflectometry (OCDR), an OFDR instrument can measure the Return Loss (RL) of events in the fiber path vs. distance, and if the Rayleigh scatter of the fiber or waveguide is visible, to make distributed Insertion Loss (IL) measurements. In addition, the reflectivity data in the time delay domain is complex, and that data may be sub-sectioned or segmented and subjected to a Fourier transform to obtain the spectral domain response for a segment of data. This segmented or local spectral data is useful in making spectral Return Loss and Insertion Loss measurements, but also in making spectral shift measurements of the Rayleigh scatter, which can be used to measure distributed strain, temperature, and/or birefringence. If the full polarization response information of the test path is also recorded, then Polarization Mode Dispersion (PMD) and Polarization Dependent Loss (PML) measurements for strongly reflecting events (reflectivity above that of Rayleigh scatter) and/or polarization cross-over events in polarization maintaining (PM) fiber due to transverse stress may also be determined.

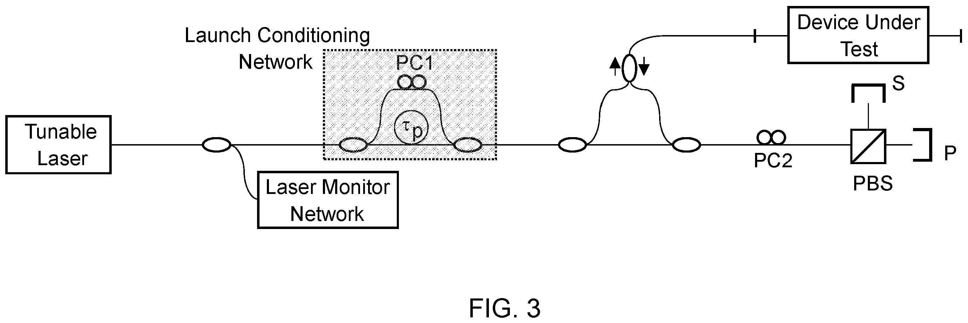

In a first example implementation, referred to as the single scan dual delayed polarization state launch technique, an OFDR-based commercial instrument, the Luna Optical Vector Analyzer (OVA), measures the complete optical transfer function of a device under test (DUT), including polarization dependent amplitude and phase information. An example OVA optical network is shown in Figure 3 which specifically includes a launch conditioning network that produces polarization diverse launch and detection states. After a portion of the tunable laser's light is tapped to monitor the laser optical frequency using the laser monitor network, the launch conditioning network splits the light into two paths, one delayed with respect to the other by τₚ, and a polarization controller (PC1) is used to ensure light in the two paths is orthogonal to each other. These two orthogonal light states are recombined and directed to a measurement interferometer, in which light reflecting from the DUT is combined with light from the interferometer reference path. Light from the measurement interferometer enters a polarization diverse receiver portion of the network, where it passes through a polarization controller PC2 and polarizing beam splitter (PBS), and into two light detectors S and P. PC2 is used to ensure that light travelling through the interferometer reference path is equally represented at both detectors S and P. Used in this manner, PC2, the PBS, and the S and P detectors constitute what is known as a polarization diverse receiver. As the laser is tuned through a range of optical frequencies, interference fringes are recorded at detectors S and P. Ideally, the laser is tuned so that the optical frequency varies linearly with time, so that detector signals sampled in equal increments of time are also in equal increments of optical frequency. However, in practice, laser tuning nonlinearities are monitored in the Laser Monitor Network (which typically consists of gas absorption cell and one or more interferometers) and compensated for either by adjusting the timing of the sampling, or by resampling the detector data.

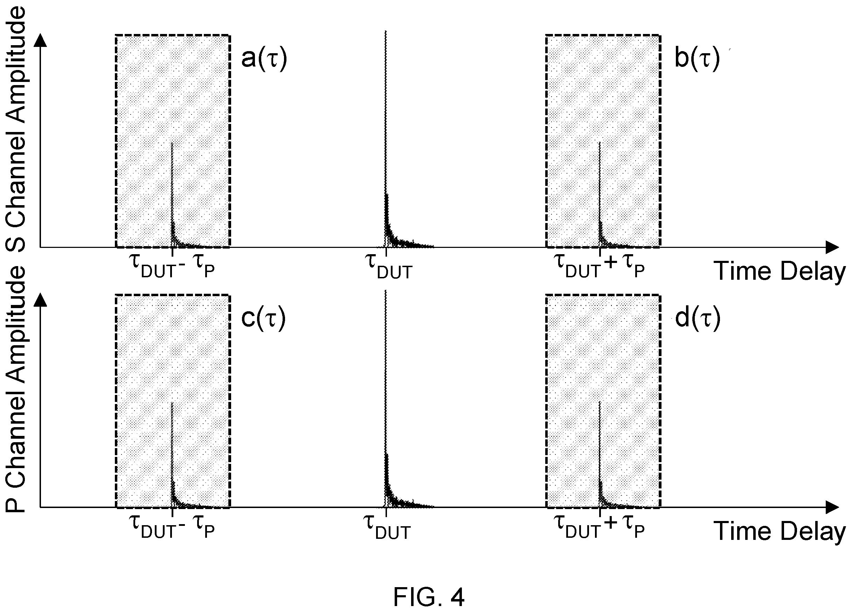

The S and P interference patterns, collected as a function of optical frequency, are subjected to a Fast Fourier Transform (FFT) to transform the interference data into the time delay domain. Because of the launch conditioning network, each reflection event in the DUT is represented in Figure 4 by four delayed events in the time delay domain in response to two orthogonal and delay launch states that traverse both reference and test paths of the interferometer. Two of the four events overlap and occur at τ_{DUT}, and the other two occur at τ_{DUT} - τ_{P} and τ_{DUT} + τ_{P}. Further, there are two sets of these events, for each of the two orthogonal detection states S and P. The four nondegenerate copies of the reflection event response in the time delay domain can be windowed (shown with dashed lines in Figure 4) and used to form the four elements of the Jones transfer matrix of the DUT. The time domain elements of the Jones Matrix can then be subjected to an inverse FFT to obtain the spectral domain version of the Jones Matrix:

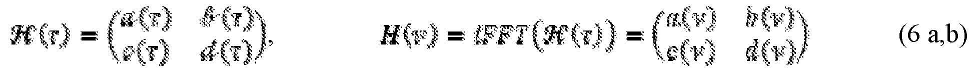

Because this OFDR approach to measuring the Jones Matrix is capable of measuring both the optical amplitude and phase response over the full tuning range of the laser, and contains the full polarization response, this transfer matrix can be used to calculate standard linear optical response DUT properties: return loss, polarization dependent loss, group delay, chromatic dispersion, polarization mode dispersion, etc.

The Principle States method is used to calculate time delay associated with polarization mode dispersion (τ_{PMD}) from the spectral transfer matrix ***H***(*v*): 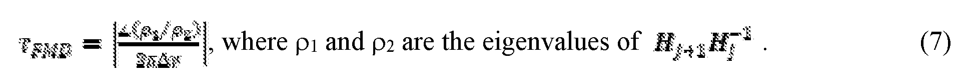 In the above expression, the *∠* operator indicates to take the phase argument of the complex term, and the j and j+1 subscripts indicate adjacent spectral index values of the transfer matrix separated by an optical frequency step of Δν.

The single scan dual delayed polarization state launch technique described above with reference to the examples shown in Figures 3 and 4 has the advantage that response to orthogonal states is essentially acquired simultaneously with a single laser optical frequency sweep. Compared to measurement techniques that require separate laser sweeps for different polarization launch states, this technique is not susceptible to measurement error caused by drift in the test device properties in the period in between sweeps. However, the use of the launch conditioning network to create a delay between two polarization input launch states effectively limits the extent of the device under test time impulse response. Thus, to effectively use this single scan dual delayed polarization state launch technique to measure distributed birefringence in fiber, the delay between the orthogonal launch states must be longer than the delay associated with the test fiber, and breaking up the delay domain into two sections corresponding to the two polarization states effectively reduces the test device length range by at least a factor of 2. Furthermore, the PMD measurement described in Equation 7 is designed to work on a coherent time impulse response, meaning that the transfer matrix element phase is a smooth, continuous function of optical spectrum-but this is not generally true for Rayleigh scatter.

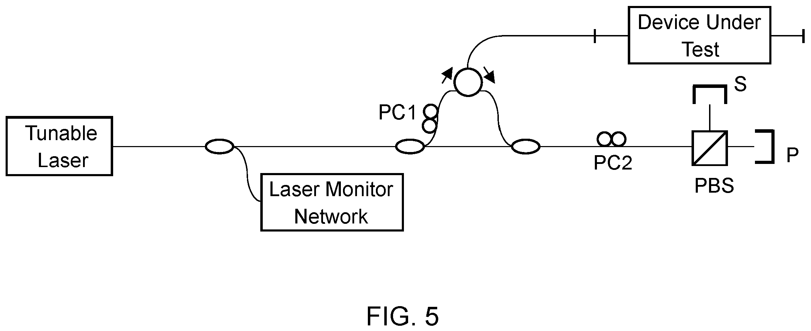

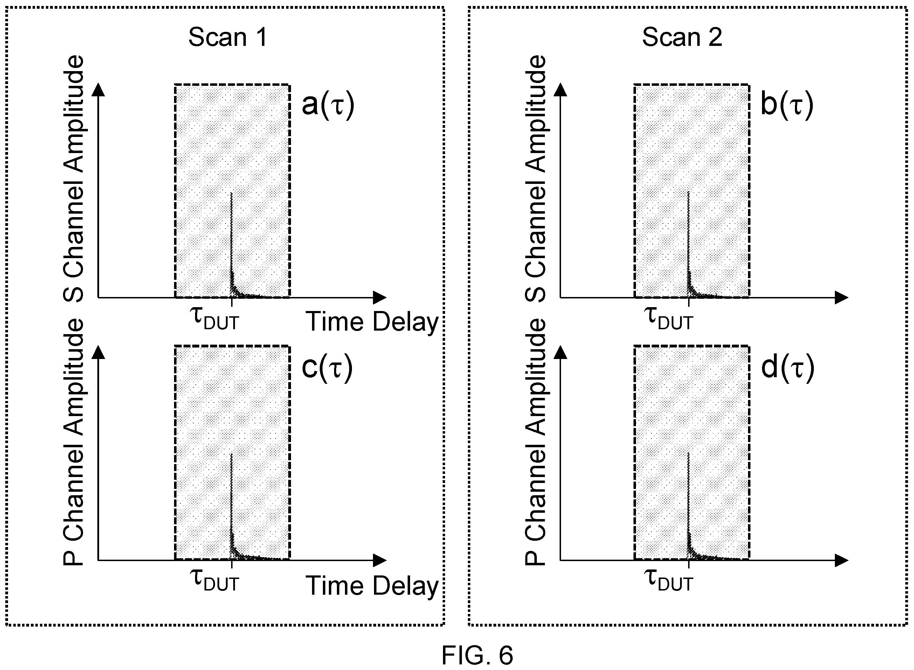

Another example implementation based on a two scan switched polarization state launch technique is now described. Figure 5 shows an example of an OFDR instrument optical network for testing devices in reflection which launches a single but modifiable polarization state to the Device Under Test (DUT). This network is similar to that of the network shown in Figure 5, but it does not contain a polarization conditioning network labeled as the launch conditioning network in Figure 3. Light from the tunable laser enters the test device measurement interferometer in a single polarization state. A polarization controller PC1 can be located either inside the instrument network as depicted in Figure 5, or anywhere along the path between the laser and the DUT. For the purpose of monitoring distributed birefringence, this polarization controller PC1 may be used to adjust the polarization state at the test fiber so that both fast and slow states of the test fiber are illuminated approximately equally. In this example implementation, the polarization controller PC1 switches between two orthogonal polarization launch states in subsequent device scans, as depicted in Figure 6. The polarization controller PC1 may also be described as a polarization switch since only two discrete states are required.

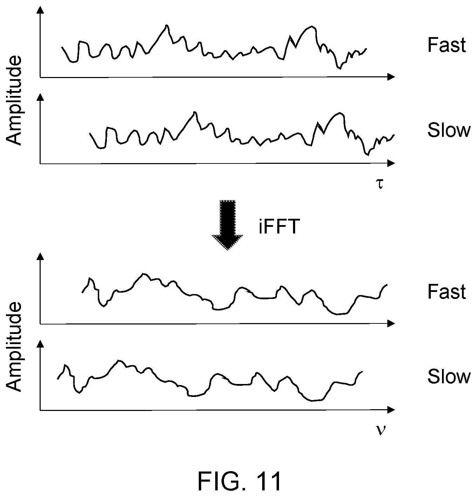

If there is significant spatial overlap between the fast and slow modes in a defined segment of Rayleigh scatter in the time domain, then a significant portion of the Rayleigh scatter pattern should be shared between the modes but shifted in the time delay and spectral domains. An example in Figure 11 illustrates the existence of substantially identical but shifted versions of the Rayleigh scatter reflection amplitude profile for a segment of the waveguide in the time delay domain and spectral domain.

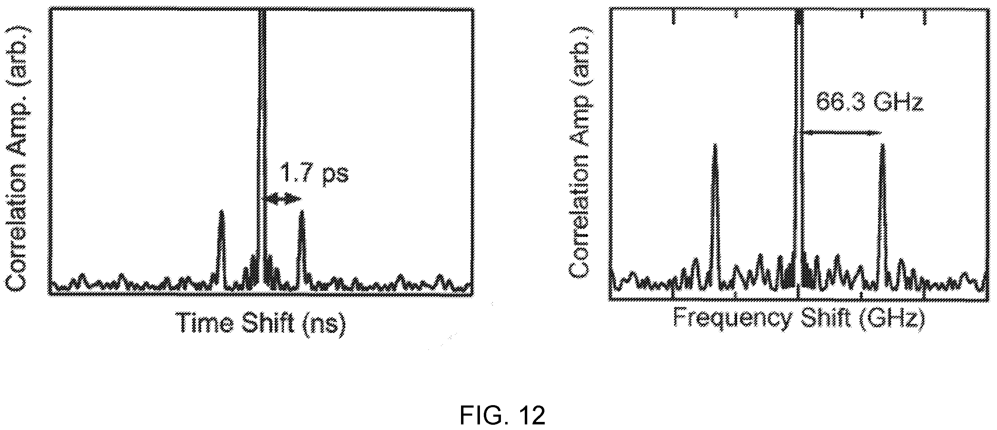

Figure 12 shows examples of time delay domain and spectral domain autocorrelation side bands stemming from test waveguide birefringence. As seen in Figure 12, an autocorrelation of a time domain segment of the Rayleigh scatter pattern results in three correlation peaks: a large center peak at 0 delay and two side peaks shifted in the positive and negative directions by the accumulated τ_{PMD}. An autocorrelation of a segment of the Rayleigh scatter that is transformed to the spectral domain results in a similar pattern, with side bands shifted in optical frequency Δν_{B} proportionally to the local difference between the slow and fast group indices nₛ-n_{f}.

The OFDR reflectometer network depicted in Figure 5 sequentially scans (e.g., Scan 1 and Scan 2 in Figure 6) the test fiber's response to orthogonal polarization launch states, and a reflection event or scatter segment is windowed, (see the windowing example for Scan 1 and Scan 2 depicted in Figure 6), to form a Jones transfer matrix. The two scan switched polarization state launch technique effectively produces the same result as for the single scan dual delayed polarization state launch technique.

The Jones transfer matrix gives a complete representation of the test device in the sense that it can be used to generate a simulated Jones vector response for any possible input polarization state. Thus, having obtained the spectral Jones transfer matrix ***H***(*v'*), it is possible to generate the test device response as if the polarization state had been selected to equally illuminate both slow and fast axes, or to generate the test device response as if the polarization state illuminated only the fast or slow axis. Using the Jones transfer matrix in this manner assumes there is not significant polarization dependent loss in the path to any portion of the birefringent waveguide. In an extreme case of polarization dependent loss, one polarization state is completely blocked, and if the blocked state corresponded to either the fast or slow birefringence axes, reconstructing the birefringence or polarization mode dispersion would not be possible.

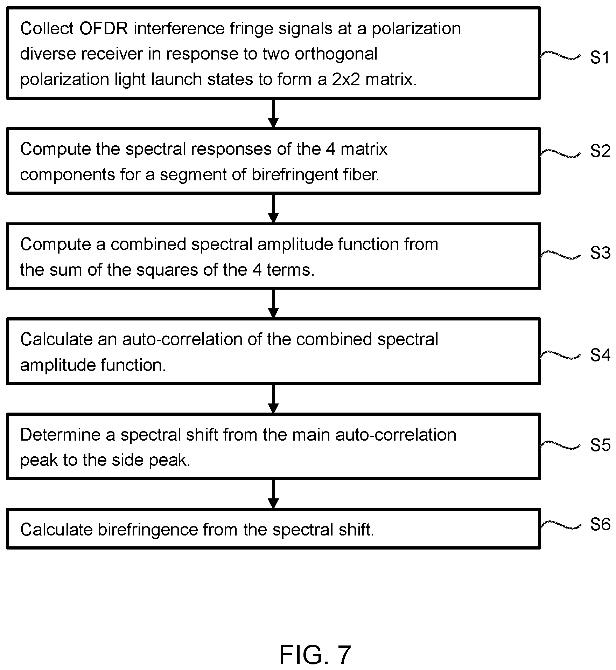

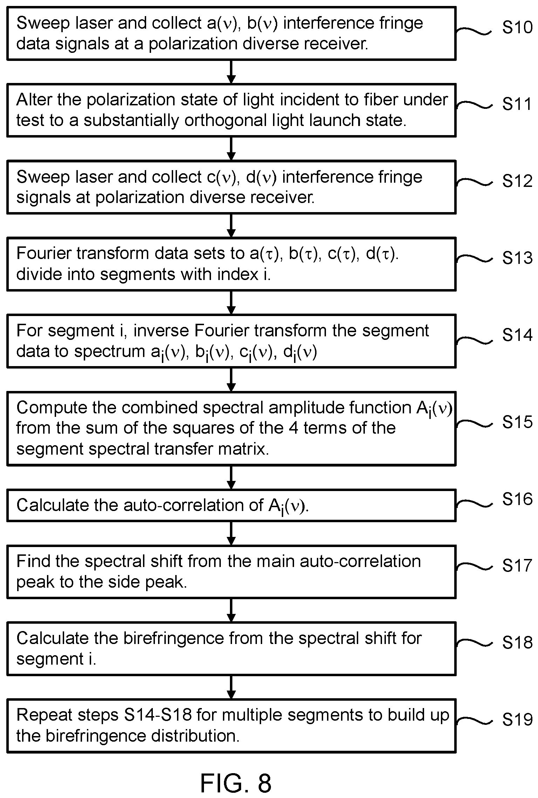

When computing a spectral shift of side bands in the autocorrelation of the scatter from a birefringent waveguide, the magnitude of the side band correlation peaks relative to the center peak are maximized when the responses from both fast and slow axes are equal. This condition is achieved by equally weighting all 4 components of the transfer function Jones transfer matrix ***H***(*ν*) to assure equal representation of both fast and slow Rayleigh scatter pattern components. To compute a spectral autocorrelation showing sideband peaks as in Figure 12, the full time delay domain transfer matrix 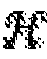 (τ) is divided into segments, where 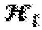 (τ) is the time delay transfer matrix of the i^{th} segment, and is subjected to a Fourier Transform to generate the segment spectral domain transfer matrix *Hᵢ*(*ν*). The polarization state averaged spectral amplitude function Aᵢ(ν) is computed from the complex terms of *Hᵢ*(*ν*)*:* ${A}_{i} \left(v\right) = \sqrt{{\left|{a}_{i}\left(ν\right)\right|}^{2} + {\left|{b}_{i}\left(ν\right)\right|}^{2} + {\left|{c}_{i}\left(ν\right)\right|}^{2} + {\left|{d}_{i}\left(ν\right)\right|}^{2}}$ (8) The polarization state averaged autocorrelation is computed as follows: ${A}_{i} \left(v\right) ∗ {A}_{i} \left(v\right) = iFFT \left\{FFT\left({A}_{i}\left(v\right)\right)FFT{\left({A}_{i}\left(v\right)\right)}^{∗}\right\}$ (9) A direct, non-circular, autocorrelation calculation may alternatively be used instead of the FFT autocorrelation described in Equation 9. The spectral shift between the center peak and side band of the polarization state averaged autocorrelation result is converted to the segment birefringence using Equation 4. This process is repeated for time domain segments i = 1 to N to form the birefringence distribution for the device under test. This process is summarized in Figure 7, with a more detailed process provided in Figure 8.

Figure 7 is a flow chart illustrating example steps for determining birefringence at a particular location in the waveguide under test using an autocorrelation of the spectral response function generated from the 4 terms of the device transfer matrix. In step S1, the OFDR instrument collects OFDR interference fringe signals at the polarization diverse receiver in response to two orthogonal polarization light launch states from the tunable laser to form a 2x2 matrix. The spectral responses of the 4 matrix components are computed for a segment of birefringent fiber (step S2). A combined spectral amplitude function is computed from the sum of the squares of the 4 terms (step S3). An autocorrelation is calculated of the combined spectral amplitude function (step S4). A spectral shift is determined from the main autocorrelation peak to the side peak (step S5), and birefringence is calculated from the spectral shift (step S6).

Figure 8 is a flow chart illustrating more detailed but still example steps for determining the distributed birefringence of a waveguide using an autocorrelation of the spectral response function generated from the 4 terms of the device transfer matrix. At step S10, the laser is swept to collect a(v), b(v) interference fringe data signals at a polarization diverse receiver. The polarization state of light incident to fiber under test is altered to a substantially orthogonal light launch state (step S11). The laser is swept again to collect c(v), d(v) interference fringe signals at polarization diverse receiver (step S12). The data sets a(v), b(v), c(v), d(v) are Fourier transformed to a(τ), b(τ), c(τ), d(τ) and divided into segments with index i (step S13). For segment i, the segment data is inverse Fourier transformed to spectrum aᵢ(ν), bᵢ(ν), cᵢ(ν), dᵢ(ν) (step S14). The combined spectral amplitude function Aᵢ(ν) is computed from the sum of the squares of the 4 terms of the segment spectral transfer matrix (step S15). The autocorrelation of Aᵢ(ν) is calculated (step S16), the spectral shift from the main autocorrelation peak to the side peak is determined (step S17), and the birefringence from the spectral shift for segment i is calculated (step S18). Steps S14-S18 are repeated for multiple segments to build up the birefringence distribution.

In a similar fashion, the spatial distribution of the Differential Group Delay τ_{PMD} can be obtained by computing a time domain polarization state averaged amplitude function from 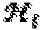 (τ), computing the segment time domain autocorrelation, calculating τ_{PMD} from the separation between the center peak and the side band, and accumulating the results for each segment.

Regardless of whether the transfer matrix ***H***(*ν*) is generated using the single scan dual delayed polarization state launch technique or the two scan switched polarization state launch technique, computing the autocorrelation as described above has a significant advantage: the side band strength is optimized regardless of the orientation of the birefringence relative to the orientation of the polarization launch states. Thus, no special alignment is needed to insure that the fast and slow states are equally populated.

In other example embodiments, the Rayleigh scatter pattern spectral signatures corresponding to the fast and slow axes of the birefringent waveguide may be mathematically identified and isolated from ***H***(*ν*) in the form of orthogonal eigenvectors of the 2x2 matrix. Amplitude functions generated from the fast and slow eigenvectors are cross-correlated to determine the optical frequency shift associated with the local birefringence. This orthogonal vector cross-correlation embodiment avoids a large correlation peak at zero frequency shift that is present in the polarization state averaged autocorrelation embodiment. The signal to noise ratio of the spectral shift measurement is improved because the cross-correlation peak is larger than the autocorrelation side band relative to the noise floor. Further, smaller spectral shifts can be measured, because of the lack of a large autocorrelation peak at zero frequency that might otherwise obscure the frequency shifted correlation peak.

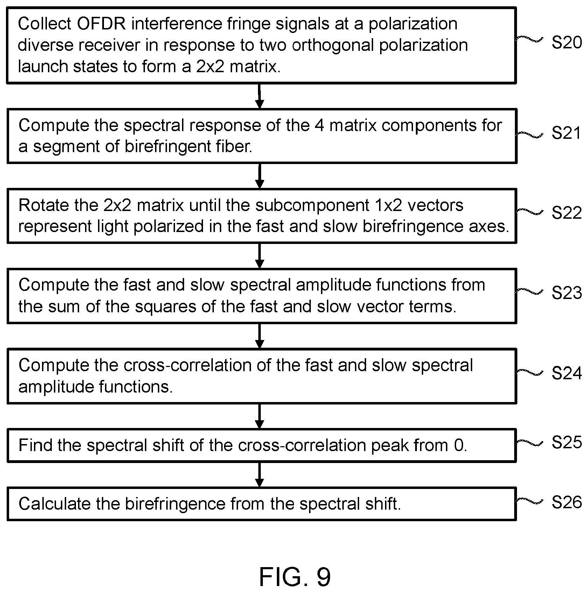

Example cross-correlation methods are now described. Figure 9 is a flow chart illustrating example steps for determining birefringence at a particular location in the waveguide under test using a cross-correlation of the spectral response functions generated from the fast and slow terms of the device transfer matrix. OFDR interference fringe signals are collected at a polarization diverse receiver in response to two orthogonal polarization launch states to form a 2x2 matrix (step S20). The spectral response of the 4 matrix components is computed for a segment of birefringent fiber (step S21). The 2x2 matrix is rotated until the subcomponent 1x2 vectors represent light polarized in the fast and slow birefringence axes (step S22). The fast and slow spectral amplitude functions are computed from the sum of the squares of the fast and slow vector terms (step S23). The cross-correlation of the fast and slow spectral amplitude functions is determined (step S24). The spectral shift of the cross-correlation peak from 0 is determined (step S25), and the birefringence is calculated from the spectral shift (step S26).

To isolate the Rayleigh scatter response of the fiber fast and slow axes efficiently, the eigen values / eigenvectors of a suitable matrix are computed based on the Principle States calculation in Equation 7. Because the amplitude and phase of the Rayleigh scatter pattern varies randomly with optical frequency, the Principle States decomposition cannot be used as in a standard PMD calculation. Instead, polarization rotation matrices are applied to the measured spectral transfer function, and orthogonal vectors of the spectral transfer matrix cross-correlated iteratively until the center peak is eliminated, and the side band peak is maximized.

As with the autocorrelation calculation, the full time delay domain transfer matrix 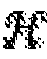 (τ) is divided in to segments, where 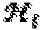 (τ) is the time delay transfer matrix of the i^{th} segment, and an inverse FFT is used to obtain the segment spectral transfer function ***H**ᵢ*(*ν*)*.* The next step is to apply rotation matrices **R** and **Φ** to ***H**ᵢ*(*ν*)*,* where θ represents a linear state rotation and ϕ represents a rotation between linear and circular states on the Poincare sphere:

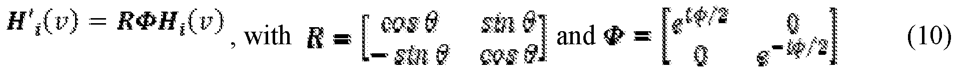

Next, orthogonal vectors of ***H**'ᵢ*(*ν*) are formed by separating columns (a'ᵢ(ν), c'ᵢ(ν)) and (b'ᵢ(ν), d'ᵢ(ν)), and the combined spectral amplitude functions Bᵢ(ν) and Cᵢ(ν) are calculated for each vector: ${B}_{i} \left(v\right) = \sqrt{{\left|a{′}_{i}\left(ν\right)\right|}^{2} + {\left|c{′}_{i}\left(v\right)\right|}^{2}} , {C}_{i} \left(v\right) = \sqrt{{\left|b{′}_{i}\left(ν\right)\right|}^{2} + {\left|d{′}_{i}\left(ν\right)\right|}^{2}}$ (11)

Then, the orthogonal vector cross-correlation between the columns of ***H'**ᵢ*(ν) is computed: ${B}_{i} \left(v\right) ∗ {C}_{i} \left(v\right) = iFFT \left\{FFT\left({B}_{i}\left(v\right)\right)FFT{\left({C}_{i}\left(v\right)\right)}^{∗}\right\}$ (12) To find optimal values for θ and ϕ, ϕ may be adjusted until the center peak disappeared below the noise floor, and θ may be adjusted until the positive side band reaches maximum amplitude and the negative side band disappears below the noise floor.

For the purpose of finding a good alignment of θ and ϕ, it may also be useful to observe the autocorrelation results for one of the two orthogonal vectors of *H'*(ν'), which may be computed as: ${B}_{i} \left(v\right) ∗ {B}_{i} \left(v\right) = iFFT \left\{FFT\left({B}_{i}\left(v\right)\right)FFT{\left({B}_{i}\left(v\right)\right)}^{∗}\right\}$ (13) To find optimal values for θ and ϕ, both angles be adjusted until the center peak is maximized and the side bands disappear below the noise floor.

***H'ᵢ***(ν) may be iteratively rotated in θ and ϕ until columns of the transfer matrix are aligned to the fast and slow axes, as revealed by the results of the orthogonal vector cross-correlation described in equation 12 and orthogonal vector autocorrelation described in Equation 13. When properly rotated, the orthogonal vector cross-correlation exhibits a single large peak with a shift from 0 in proportion to the local birefringence. The side band peaks of the orthogonal vector autocorrelation tend to disappear at optimal values for θ and ϕ.

Alternatively, a calculation similar to Principle States decomposition may be used to find optimal values for θ and ϕ, as in the standard PMD calculation described in Equation 7. The Principle states decomposition works well when the time domain form of the transfer matrix 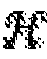 (τ) terms is coherent, or in another words, has a clearly defined time impulse response peak. The time domain response of Rayleigh scatter, however, is not coherent: it is random in amplitude and phase over the time delay domain window. The time domain Rayleigh scatter signature, however, does form coherent peak when a correlation is applied. Thus, if the matrix multiply in Equation 7 is replaced with a correlation calculation, the calculation can successfully find the rotation of ***H***(*ν*) that separates the eigenvectors, and the corresponding spectral eigenvalue calculation described in equation 7 will produce the temporal shift corresponding to the local time delay associated with PMD.

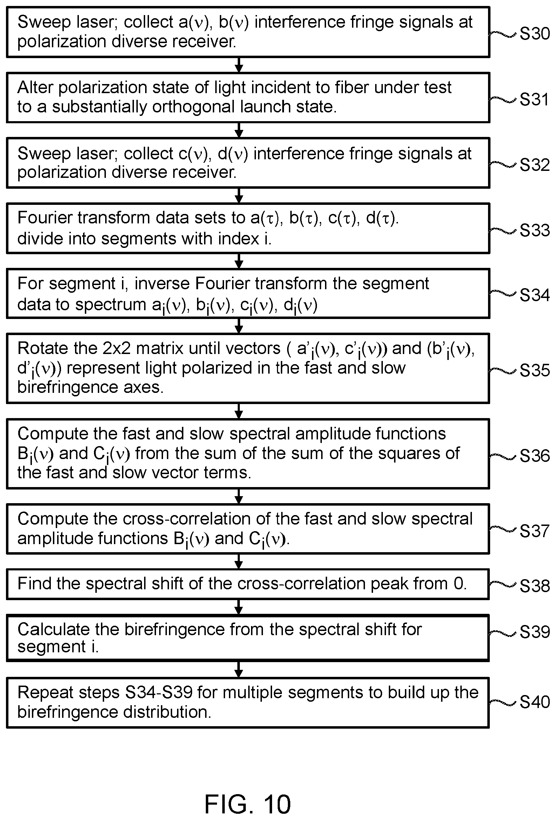

The spectral shift between zero and a side band peak of the orthogonal vector cross-correlation result described in Equation 12 is converted to the segment birefringence using Equation 4. This process is repeated for time domain segments i = 1 to N to form the birefringence distribution for the birefringence waveguide under test. This process of steps, summarized in Figure 9 described above, is outlined in more detail in Figure 10.

Figure 10 is a flow chart illustrates example steps for determining the distributed birefringence of a waveguide using a cross-correlation of the spectral response functions generated from the fast and slow terms of the device transfer matrix. At step S30, the laser is swept to collect a(v), b(v) interference fringe data signals at a polarization diverse receiver. The polarization state of light incident to fiber under test is altered to a substantially orthogonal light launch state (step S31). The laser is swept again to collect c(*ν*), d(*ν*) interference fringe signals at polarization diverse receiver (step S32). The data sets a(*ν*), b(*ν*), c(*ν*), d(*ν*) are Fourier transformed to a(τ), b(τ), c(τ), d(τ) and divided into segments with index i (step S33). For segment i, the segment data is inverse Fourier transformed to spectrum aᵢ(*ν*), bᵢ(*ν*), cᵢ(*ν*), dᵢ(*ν*) (step S34). The 2x2 matrix is rotated until vectors ( a'ᵢ(*ν*) , c'ᵢ(*ν*) ) and ( b'ᵢ(*ν*) , d'ᵢ(*ν*) ) represent light polarized in the fast and slow birefringence axes (step S35). The fast and slow spectral amplitude functions Bᵢ(*ν*) and Cᵢ(*ν*) are computed from the sum of the sum of the squares of the fast and slow vector terms (step S36). The cross-correlation of the fast and slow spectral amplitude functions Bᵢ(*ν*) and Cᵢ(*ν*) is computed (step S37). The spectral shift of the cross-correlation peak from 0 is determined (step S38), and the birefringence is calculated from the spectral shift for segment i (step S39). Steps S34-S39 are repeated for multiple segments to build up the birefringence distribution (step S40).

In a similar fashion, the spatial distribution of the Differential Group Delay τ_{PMD} can be obtained by obtaining a segment time domain transfer function 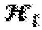 (τ), rotating the matrix until the subcomponent vectors represent light polarized in the fast and slow birefringence axes, computing the fast and slow vector amplitude functions, computing the segment time domain cross-correlation between the fast and slow amplitude functions, calculating τ_{PMD} from the separation between zero and the side band, and accumulating the results for each segment.

While it is preferred that the two polarization states launched to the device under test are orthogonal in either the dual state delayed single scan launch technique or the switched state two scan launch example implementations technique, orthogonality is not required. The launch polarization states may be characterized in a calibration procedure, and a correction matrix calculated, so that imperfections in polarization state orthogonality may be corrected for mathematically. Also, increasing errors in the polarization state orthogonality only gradually degrade the quality of the birefringent measurements, so some level of error is generally tolerable. For example, polarization controllers that are designed to switch linear polarization states by 90° with a maximum error over a broad wavelength range of 5° are commercially available. Such an error, even uncorrected, has little impact on either the polarization state averaged autocorrelation technique or the orthogonal vector cross-correlation technique of determining the waveguide birefringence, because the correlation peaks would still be clearly defined, and the spectral shift of the correlation peaks would be unaffected.

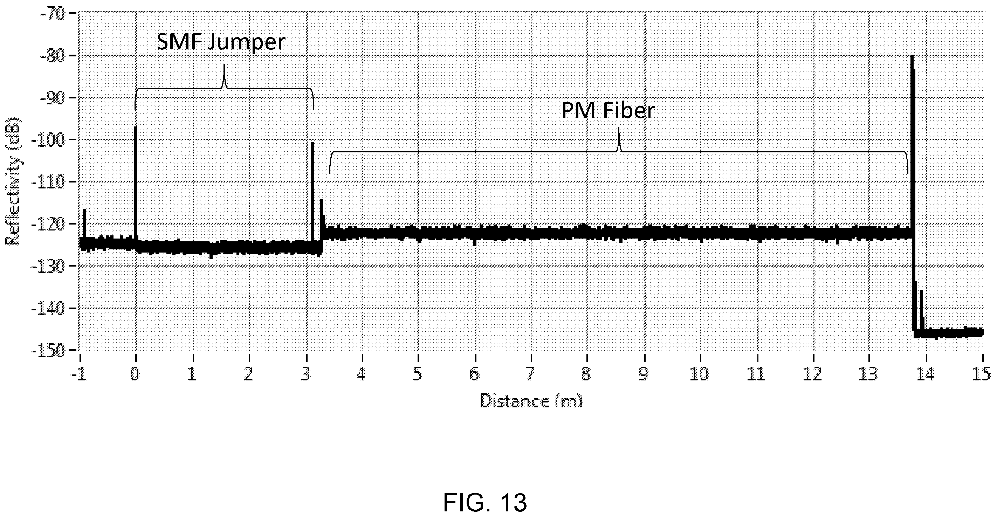

Example results collected from a PM test fiber for various matrix rotation values of θ are now described and illustrated. Data was collected using a Luna OBR 4600 modified to include a polarization controller that manipulated the polarization state at the test fiber, similar to the network depicted in Figure 5. The test device included a 3.1 m single mode fiber (SMF) jumper that joins the instrument front panel to the test fiber connector, and a 10.6 m segment of gyroscope grade PM fiber spliced to a 0.2 m SMF pigtail and connector. The OBR wavelength scan range was set to 1530-1615.75 nm, which resulted in a 9.8 µm sample spacing along the length of the test fiber, using an assumed value for the group index of refraction of 1.4682. The test path was scanned twice in quick succession, with a 90° polarization state rotation introduced in between the scans. In this experiment polarization controller PC1 was adjusted so that the first scan illuminated only the fast axis of the PM fiber segment. Figure 13 shows reflectivity vs. distance with a 10 mm spatial filter applied.

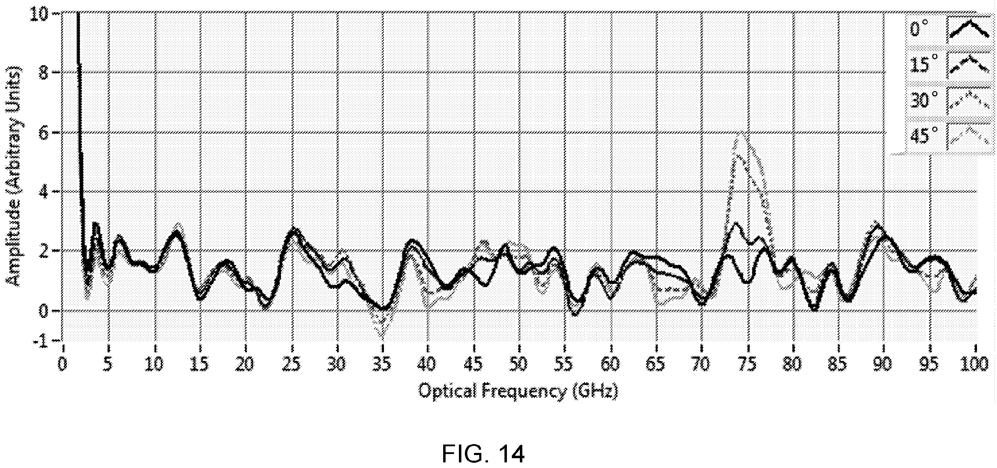

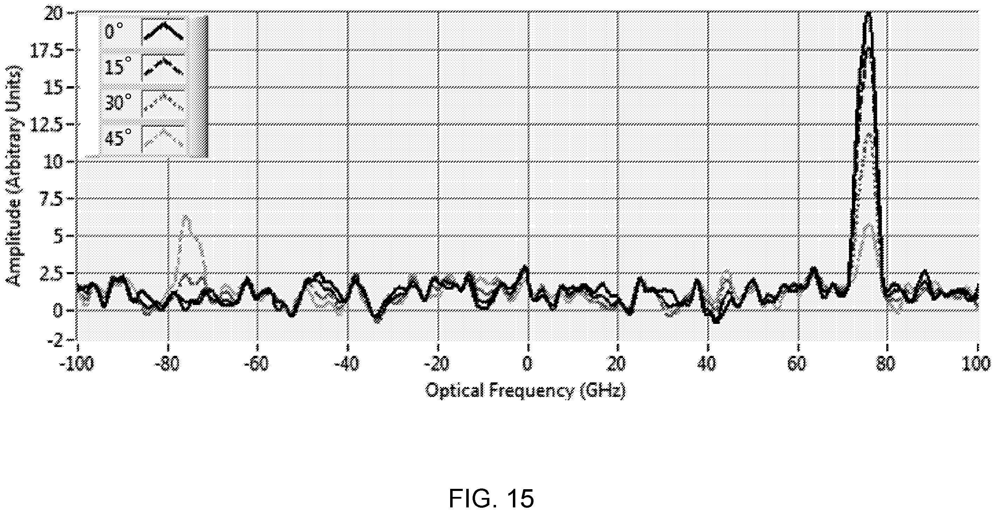

The Rayleigh scatter data over a 10 m section between 3.5 and 13.5 m was divided into 4 cm segments, each with roughly 4082 sampled points in each section, and transformed into the spectral domain. To illustrate the effects of a linear state rotation in θ on the single vector autocorrelation and the orthogonal vector cross-correlation results described by Equations 12 and 13, data centered at 5.34 m was processed with various values for θ and plotted the results for each in Figures 14 and 15. The single vector autocorrelation side band peak in Figure 14 is maximized when θ=45°, and light represented by each column of ***H'**ᵢ*(ν) is split equally between the fiber fast and slow axes and the side band amplitude drops into the noise floor when θ=0°. The orthogonal vector cross-correlation peak amplitude shown in figure 15 has a maximum at θ=0°, when light represented by each column of ***H'ᵢ***(ν) is in either the fast or slow axis. Two cross-correlation side band peaks are of equal amplitude are symmetric about v=0 at θ=45°; this condition represents when each column of ***H'ᵢ***(ν) is split equally between the fiber fast and slow birefringence axes.

Significantly, the signal to noise ratio is roughly 3.3 times higher for cross-correlation peak in Figure 14 at θ=0° vs. the autocorrelation peak in Figure 15 at θ=45°, and the signal to noise ratio of the cross-correlation peaks at θ=45° in Figure 15 (a worst cross-correlation case) is roughly equal to the signal to noise ratio of the autocorrelation peak in Figure 14 at θ=45° (the best autocorrelation case). Furthermore, computing the optical frequency shift of the cross-correlation peak is simpler and more efficient without the presence of a large correlation peak at 0.

Motion along the test fiber path and other noise sources can cause spurious sidebands on the central autocorrelation peak. These spurious sidebands can interfere with the birefringence induced sideband peak and increase birefringence measurement noise. Because the cross-correlation embodiments for obtaining the birefringence spectral shift lack a strong center peak, the spectral shift calculation quality is not be subjected to as much degradation in the presence of fiber motion or vibration.

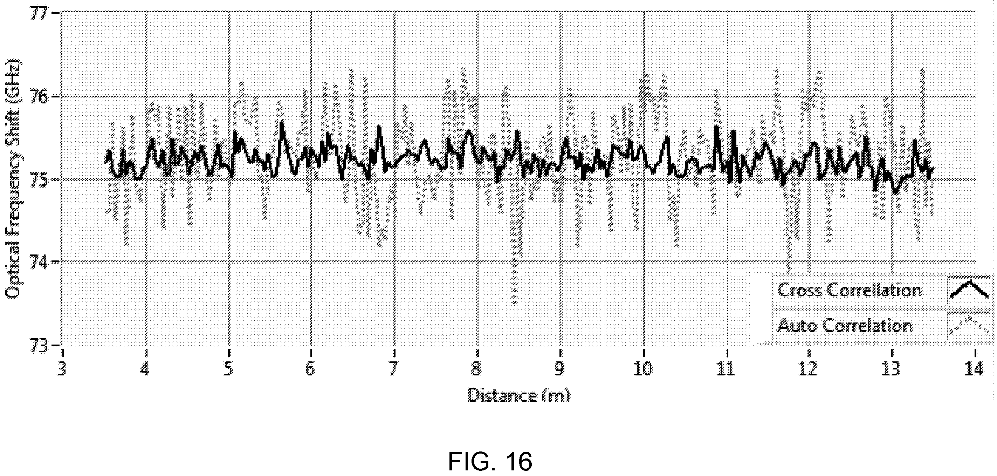

The birefringence induced optical frequency shifts for the polarization state averaged autocorrelation method (Equation 9) and the orthogonal vector cross-correlation method (Equation 12) for the same source data set are shown in Figure 16. The cross-correlation results have roughly 3 times lower spatial variation than the autocorrelation results. Repeated measurements showed that most of the spatial variations observed in the cross-correlation results are repeatable and likely reflect real variations in the local transverse stress. Because of the spatial variation repeatability of the cross-correlation result, the improvement in the optical frequency shift signal-to-noise ratio is likely better than a 3x multiple.

### Example Applications

The capability to measure both birefringence amplitude and the polarization state orientation in a distributed fashion along the length of the sensor presents a host of sensing opportunities and applications. One example is to measure both temperature and strain in a distributed fashion in PM fiber by measuring both fast and slow axes spectral shift between a reference state and a measurement state. Obtaining two spectral shifts allows for the simultaneous determination of both temperature and strain. The lack of a polarization alignment requirement simplifies sensor design and lowers sensor cost, and the noise improvements associated with the birefringence spectral shift techniques described above improve the temperature-strain discrimination resolution.

Another application is pressure sensing based on pressure induced birefringence variation in side-hole fiber. The ability to measure distributed birefringence with high spatial resolution in a low-profile sensor may be useful in situations where a high-pressure gradient is present. The lack of a polarization alignment requirement simplifies sensor design and lowers sensor cost, and the noise improvements associated with the birefringence spectral shift techniques described above improve the pressure resolution.

Fiber optic electric current sensors operate by sensing the polarization state rotation induced by current related magnetic fields through the Faraday effect. These sensors typically measure the total polarization state rotation through a sensor coil. The ability to measure polarization state orientation with high spatial resolution along the length of a sensor fiber enables the detection of steep magnetic field gradients.

When fiber optic strain sensors are embedded in structures, transverse strain induced birefringence is often present. The techniques described above may be used to sense and correct for this birefringence and thereby prevent large axial strain measurement errors. Further, the ability to measure strains both along and transverse to the fiber axis, and to measure the orientation of the transverse strain, can provide valuable information about the structure in which the fiber is embedded in.

When optical fiber is bent in a tight radius, e.g., generally below a radius of approximately 10 mm, and if the tight bend is held for long periods of time, the risk of breakage increases dramatically. Since bending induces birefringence in the fiber core, distributed birefringence measurement in accordance with the above techniques aid in finding potential spots where a fiber is installed with a tight bend radius that may result in a future break.

The above applications are just examples. Many other applications of the technology described in this application are contemplated.

Although the present disclosure has been described with reference to particular example embodiments, implementations, techniques, etc., it will be appreciated by those skilled in the art that the disclosure may be embodied in many other forms. The matter for which protection is sought is defined by the appended claims.

All methods described herein can be performed in any suitable order unless otherwise indicated herein. The use of any and all examples, or example language (e.g., "such as," "like," etc.) is intended merely to better illuminate the examples and does not pose a limitation on the scope of the claims appended hereto unless otherwise claimed. No language or terminology in this specification should be construed as indicating any non-claimed element as essential or critical.

Whenever it is described in this document that a given item is present in "some embodiments," "various embodiments," "certain embodiments," "certain example embodiments, "some example embodiments," "an exemplary embodiment," or whenever any other similar language is used, it should be understood that the given item is present in at least one embodiment, though is not necessarily present in all embodiments. Consistent with the foregoing, whenever it is described in this document that an action "may," "can," or "could" be performed, that a feature, element, or component "may," "can," or "could" be included in or is applicable to a given context, that a given item "may," "can," or "could" possess a given attribute, or whenever any similar phrase involving the term "may," "can," or "could" is used, it should be understood that the given action, feature, element, component, attribute, etc. is present in at least one embodiment, though is not necessarily present in all embodiments.

Terms and phrases used in this document, and variations thereof, unless otherwise expressly stated, should be construed as open-ended rather than limiting. As examples of the foregoing: "and/or" includes any and all combinations of one or more of the associated listed items (e.g., a and/or b means a, b, or a and b); the singular forms "a", "an" and "the" should be read as meaning "at least one," "one or more," or the like; the term "example" is used provide examples of the subject under discussion, not an exhaustive or limiting list thereof; the terms "comprise" and "include" (and other conjugations and other variations thereof) specify the presence of the associated listed items but do not preclude the presence or addition of one or more other items; and if an item is described as "optional," such description should not be understood to indicate that other items are also not optional. In the present application, the words "configured to..." are used to mean that an element of an apparatus has a configuration able to carry out the defined operation. In this context, a "configuration" means an arrangement or manner of interconnection. "Configured to" does not imply that the apparatus element needs to be changed in any way in order to provide the defined operation. The terms "wherein," "such that," etc. indicate structure, requirements of a method, and/or other features to be given patentable weight.

As used herein, the singular forms "a," "an," and "the" may also refer to plural articles, i.e., "one or more," "at least one," etc., unless specifically stated otherwise.

Recitation of specific values are provided as examples and are not intended to be limiting. Any range of values is merely intended to serve as a shorthand method of referring individually to each separate value falling within the range, unless otherwise indicated herein, and each separate value is incorporated into the specification as if it were individually recited herein. Where a specific range of values is provided, it is understood that each intervening value, to the tenth of the unit of the lower limit unless the context clearly dictates otherwise, between the upper and lower limit of that range and any other stated or intervening value in that stated range, is included therein. All smaller subranges are also included. The upper and lower limits of these smaller ranges are also included therein, subject to any specifically excluded limit in the stated range.

The term "about" or "approximately" means an acceptable error for a particular recited value, which depends in part on how the value is measured or determined. In certain embodiments, "about" can mean 1 or more standard deviations. When the antecedent term "about" is applied to a recited range or value it denotes an approximation within the deviation in the range or value known or expected in the art from the measurements method. For removal of doubt, it shall be understood that any range stated herein that does not specifically recite the term "about" before the range or before any value within the stated range inherently includes such term to encompass the approximation within the deviation noted above.

## Claims

1. An optical frequency domain reflectometry apparatus for determining birefringence for a waveguide segment at a particular location along the waveguide, comprising:
a light source to couple light tuned through a range of frequencies and with a first polarization state into the waveguide and to couple light tuned through a range of frequencies and with a second polarization state into the waveguide, wherein the second polarization state is substantially orthogonal to the first polarization state;
optical detection circuitry configured to:
detect first polarization state Rayleigh back scatter reflections associated with the waveguide segment and generate first polarization state Rayleigh back scatter data associated with the first polarization state Rayleigh back scatter reflections, and
detect second polarization state Rayleigh back scatter reflections associated with the waveguide segment and generate second polarization state Rayleigh back scatter data associated with the second polarization state Rayleigh back scatter reflections;
processing circuitry configured to:
determine a spectral response based on the first polarization state Rayleigh back scatter data and the second polarization state Rayleigh back scatter data;
compute a correlation based on the spectral response;
determine the birefringence of the waveguide segment at the particular location along the waveguide based on the correlation; and
use the determined birefringence to characterize the waveguide segment;
the optical frequency domain reflectometry apparatus being **characterised in that** the processing circuitry is further configured to:
form a matrix based on the first polarization state Rayleigh back scatter data and the second polarization state Rayleigh back scatter data, and
compute a spectral response for each component of the matrix;
wherein the matrix is a 2x2 matrix having two 1x2 vectors, and wherein the processing circuitry is configured to:
rotate the 2x2 matrix until one of the rotated 1x2 vectors represents light polarized in the fast polarization mode and the other of the rotated 1x2 vectors represents light polarized in the slow polarization mode;
store in memory one or more rotation angles associated with the rotating of the 2x2 matrix; and
use the one or more rotation angles to characterize the waveguide segment.

2. The optical frequency domain reflectometry apparatus in claim 1, wherein the optical apparatus includes an optical vector analysis network comprising:
a launch conditioning network, coupled to the light source, including a first light path and a second light path, where the second light path is delayed with respect to the first light path, and a polarization controller to ensure light in the first light path is substantially orthogonal to light in the second light path; and
a measurement interferometer to combine the light from first and second paths in the launch conditioning network with light reflected from the waveguide,
wherein the optical detection circuitry includes a polarization diverse receiver, coupled to the measurement interferometer, to separately detect the first polarization state Rayleigh back scatter data and the second polarization state Rayleigh back scatter data.

3. The optical frequency domain reflectometry apparatus in claim 1, wherein the light source is configured to couple light with the first polarization state into the waveguide during a first time period and to couple light with the second polarization state into the waveguide during a second time period, and
wherein the optical apparatus includes an optical backscatter reflectometer network comprising:
a polarization controller to switch between two orthogonal polarization launch states for the first and second time periods; and
a measurement interferometer to combine the light from the polarization controller with light reflected from the waveguide,
wherein the optical detection circuitry includes a polarization diverse receiver, coupled to the measurement interferometer, to separately detect the first polarization state Rayleigh back scatter data and the second polarization state Rayleigh back scatter data.

4. The optical frequency domain reflectometry apparatus in claim 1, wherein the processing circuitry is configured to:
combine the one rotated 1x2 vector and the other rotated 1x2 vector to produce a combined result,
compute a fast spectral amplitude function and a slow spectral amplitude function based on the combined result.

5. The optical frequency domain reflectometry apparatus in claim 4, wherein the processing circuitry is configured to:
compute a cross-correlation of the fast spectral amplitude function and the slow spectral amplitude function;
determine a spectral shift of a cross-correlation peak from zero; and
determine the birefringence of the waveguide segment at the particular location along the waveguide based on the spectral shift.

6. The optical frequency domain reflectometry apparatus in claim 1, wherein the processing circuitry is configured to:
determine a birefringence value for each of multiple waveguide segments along the waveguide, and
combine the birefringence values for the multiple waveguide segments to form a birefringence distribution over the length of the waveguide.

7. An optical frequency domain reflectometry method for determining a birefringence for a waveguide segment at a particular location along the waveguide, where the waveguide has a first index of refraction for a first polarization state and a second, different index of refraction for a second polarization state that is substantially orthogonal to the first polarization state, the method comprising:
coupling light tuned through a range of frequencies and with a first polarization state into the waveguide;
detecting, at a polarization diverse receiver, first polarization state Rayleigh back scatter reflections associated with the waveguide segment;
generating first polarization state Rayleigh back scatter data associated with the first polarization state Rayleigh back scatter reflections;
coupling light tuned through a range of frequencies and with a second polarization state into the waveguide that is substantially orthogonal to the light with the first polarization state;
detecting, at a polarization diverse receiver, second polarization state Rayleigh back scatter reflections associated with the waveguide segment;
generating second polarization state Rayleigh back scatter data associated with the second polarization state Rayleigh back scatter reflections;
determining a spectral response based on the first polarization state Rayleigh back scatter data and the second polarization state Rayleigh back scatter data;
computing a correlation based on the spectral response;
determining the birefringence of the waveguide segment at the particular location along the waveguide based on the correlation; and
using the determined birefringence to characterize the waveguide segment;
the method being **characterised in that** it further comprises:
forming a matrix based on the first polarization state Rayleigh back scatter data and the second polarization state Rayleigh back scatter data, and
computing a spectral response for each component of the matrix;
wherein the matrix is a 2x2 matrix having two 1x2 vectors, and wherein the method comprises:
rotating the 2x2 matrix until one of the rotated 1x2 vectors represents light polarized in the fast polarization mode and the other of the rotated 1x2 vectors represents light polarized in the slow polarization mode;
storing in memory one or more rotation angles associated with the rotating of the 2x2 matrix; and
using the one or more rotation angles to characterize the waveguide segment.

## Patentansprüche

1. Optische Frequenzbereichs-Reflektometrievorrichtung zum Bestimmen einer Doppelbrechung für ein Wellenleitersegment an einer bestimmten Stelle entlang des Wellenleiters, wobei die Reflektometrievorrichtung Folgendes umfasst:
eine Lichtquelle zum Koppeln von Licht, das über einen Bereich von Frequenzen abgestimmt wird und in einem ersten Polarisationszustand ist, in den Wellenleiter und zum Koppeln von Licht, das über einen Bereich von Frequenzen abgestimmt wird und in einem zweiten Polarisationszustand ist, in den Wellenleiter, wobei der zweite Polarisationszustand zu dem ersten Polarisationszustand im Wesentlichen orthogonal ist;
eine optische Detektionsschaltungsanordnung, die zu Folgendem ausgelegt ist:
Detektieren von Rayleigh-Rückstreureflexionen des ersten Polarisationszustands, die dem Wellenleitersegment zugeordnet sind, und Erzeugen von Rayleigh-Rückstreudaten des ersten Polarisationszustands, die den Rayleigh-Rückstreureflexionen des ersten Polarisationszustands zugeordnet sind, und
Detektieren von Rayleigh-Rückstreureflexionen des zweiten Polarisationszustands, die dem Wellenleitersegment zugeordnet sind, und Erzeugen von Rayleigh-Rückstreudaten des zweiten Polarisationszustands, die den Rayleigh-Rückstreureflexionen des zweiten Polarisationszustands zugeordnet sind;
wobei die Verarbeitungsschaltungsanordnung zu Folgendem ausgelegt ist:
Bestimmen einer Spektralempfindlichkeit basierend auf den Rayleigh-Rückstreudaten des ersten Polarisationszustands und den Rayleigh-Rückstreudaten des zweiten Polarisationszustands;
Berechnen einer Korrelation basierend auf der Spektralempfindlichkeit;
Bestimmen der Doppelbrechung des Wellenleitersegments an der bestimmten Stelle entlang des Wellenleiters basierend auf der Korrelation; und
Verwenden der bestimmten Doppelbrechung, um das Wellenleitersegment zu charakterisieren;
wobei die optische Frequenzbereichs-Reflektometrievorrichtung **dadurch gekennzeichnet ist, dass** die Verarbeitungsschaltungsanordnung ferner zu Folgendem ausgelegt ist:
Bilden einer Matrix basierend auf den Rayleigh-Rückstreudaten des ersten Polarisationszustands und den Rayleigh-Rückstreudaten des zweiten Polarisationszustands und
Berechnen einer Spektralempfindlichkeit für jede Komponente der Matrix;
wobei die Matrix eine 2x2-Matrix mit zwei 1x2-Vektoren ist und wobei die Verarbeitungsschaltungsanordnung zu Folgendem ausgelegt ist:
Drehen der 2x2-Matrix, bis einer der gedrehten 1x2-Vektoren Licht repräsentiert, das im Modus mit schneller Polarisation polarisiert ist, und der andere der gedrehten 1x2-Vektoren Licht repräsentiert, das im Modus mit langsamer Polarisation polarisiert ist;
Speichern eines oder mehrerer Drehwinkel, die dem Drehen der 2x2-Matrix zugeordnet sind, im Speicher; und
Verwenden des einen oder der mehreren Drehwinkel, um das Wellenleitersegment zu charakterisieren.

2. Optische Frequenzbereichs-Reflektometrievorrichtung nach Anspruch 1, wobei die optische Vorrichtung ein optisches Vektoranalysenetzwerk beinhaltet, das Folgendes umfasst:
ein Startkonditionierungsnetzwerk, das mit der Lichtquelle gekoppelt ist, das einen ersten Lichtweg und
einen zweiten Lichtweg enthält, wobei der zweite Lichtweg in Bezug auf den ersten Lichtweg verzögert ist, und eine Polarisationssteuereinheit, um sicherzustellen, dass Licht in dem ersten Lichtweg im Wesentlichen orthogonal zu Licht in dem zweiten Lichtweg ist; und
ein Messinterferometer zum Kombinieren des Lichts von dem ersten und von dem zweiten Weg in dem Startkonditionierungsnetzwerk mit Licht, das von dem Wellenleiter reflektiert wird,
wobei die optische Detektionsschaltungsanordnung einen polarisationsdiversen Empfänger beinhaltet, der mit dem Messinterferometer gekoppelt ist, um die Rayleigh-Rückstreudaten des ersten Polarisationszustands und die Rayleigh-Rückstreudaten des zweiten Polarisationszustands separat zu detektieren.

3. Optische Frequenzbereichs-Reflektometrievorrichtung nach Anspruch 1, wobei die Lichtquelle dazu ausgelegt ist, während einer ersten Zeitdauer Licht mit dem ersten Polarisationszustand in den Wellenleiter zu koppeln und während einer zweiten Zeitdauer Licht mit dem zweiten Polarisationszustand in den Wellenleiter zu koppeln, und
wobei die optische Vorrichtung ein optisches Rückstreureflektometer-Netzwerk beinhaltet, das Folgendes umfasst:
eine Polarisationssteuereinheit zum Umschalten zwischen zwei orthogonalen Polarisationsstartzuständen während der ersten und zweiten Zeitdauer; und
ein Messinterferometer zum Kombinieren des Lichts von der Polarisationssteuereinheit mit Licht, das von dem Wellenleiter reflektiert wird,
wobei die optische Detektionsschaltungsanordnung einen polarisationsdiversen Empfänger beinhaltet, der mit dem Messinterferometer gekoppelt ist, um die Rayleigh-Rückstreudaten des ersten Polarisationszustands und die Rayleigh-Rückstreudaten des zweiten Polarisationszustands separat zu detektieren.

4. Optische Frequenzbereichs-Reflektometrievorrichtung nach Anspruch 1, wobei die Verarbeitungsschaltungsanordnung zu Folgendem ausgelegt ist:
Kombinieren des einen gedrehten 1x2-Vektors und des anderen gedrehten 1x2-Vektors, um ein kombiniertes Ergebnis zu erzeugen.
Berechnen einer Funktion der schnellen Spektralamplitude und einer Funktion der langsamen Spektralamplitude basierend auf dem kombinierten Ergebnis.

5. Optische Frequenzbereichs-Reflektometrievorrichtung nach Anspruch 4, wobei die Verarbeitungsschaltungsanordnung zu Folgendem ausgelegt ist:
Berechnen einer Kreuzkorrelation der Funktion der schnellen Spektralamplitude und der Funktion der langsamen Spektralamplitude;
Bestimmen einer Spektralverschiebung einer Kreuzkorrelationsspitze von Null; und
Bestimmen der Doppelbrechung des Wellenleitersegments an der bestimmten Stelle entlang des Wellenleiters basierend auf der Spektralverschiebung.

6. Optische Frequenzbereichs-Reflektometrievorrichtung nach Anspruch 1, wobei die Verarbeitungsschaltungsanordnung zu Folgendem ausgelegt ist:
Bestimmen eines Doppelbrechungswerts für jedes von mehreren Wellenleitersegmenten entlang des Wellenleiters, und
Kombinieren der Doppelbrechungswerte für die mehreren Wellenleitersegmente, um eine Doppelbrechungsverteilung über die Länge des Wellenleiters zu bilden.

7. Verfahren für die optische Frequenzbereichs-Reflektometrie zum Bestimmen einer Doppelbrechung für ein Wellenleitersegment an einer bestimmten Stelle entlang des Wellenleiters, wobei der Wellenleiter einen ersten Brechungsindex für einen ersten Polarisationszustand und einen zweiten, anderen Brechungsindex für einen zweiten Polarisationszustand, der im Wesentlichen orthogonal zu dem ersten Polarisationszustand ist, aufweist, wobei das Verfahren Folgendes umfasst:
Koppeln von Licht, das über einen Bereich von Frequenzen abgestimmt wird und in einem ersten Polarisationszustand ist, in den Wellenleiter;
Detektieren von Rayleigh-Rückstreureflexionen des ersten Polarisationszustands, die dem Wellenleitersegment zugeordnet sind, bei einem polarisationsdiversen Empfänger;
Erzeugen von Rayleigh-Rückstreudaten des ersten Polarisationszustands, die Rayleigh-Rückstreureflexionen des ersten Polarisationszustands zugeordnet sind;
Koppeln von Licht, das über einen Bereich von Frequenzen abgestimmt wird und in einem zweiten Polarisationszustand ist, der im Wesentlichen orthogonal zu dem Licht in dem ersten Polarisationszustand ist, in den Wellenleiter;
Detektieren von Rayleigh-Rückstreureflexionen des zweiten Polarisationszustands, die dem Wellenleitersegment zugeordnet sind, an einem polarisationsdiversen Empfänger;
Erzeugen von Rayleigh-Rückstreudaten des zweiten Polarisationszustands, die Rayleigh-Rückstreureflexionen des zweiten Polarisationszustands zugeordnet sind;
Bestimmen einer Spektralempfindlichkeit basierend auf den Rayleigh-Rückstreudaten des ersten Polarisationszustands und den Rayleigh-Rückstreudaten des zweiten Polarisationszustands;
Berechnen einer Korrelation basierend auf der Spektralempfindlichkeit;
Bestimmen der Doppelbrechung des Wellenleitersegments an der bestimmten Stelle entlang des Wellenleiters basierend auf der Korrelation; und
Verwenden der bestimmten Doppelbrechung, um das Wellenleitersegment zu charakterisieren;
wobei das Verfahren ferner **gekennzeichnet ist durch**:
Bilden einer Matrix basierend auf den Rayleigh-Rückstreudaten des ersten Polarisationszustands und den Rayleigh-Rückstreudaten des zweiten Polarisationszustands und
Berechnen einer Spektralempfindlichkeit für jede Komponente der Matrix;
wobei die Matrix eine 2x2-Matrix mit zwei 1x2-Vektoren ist und wobei das Verfahren Folgendes umfasst:
Drehen der 2x2-Matrix, bis einer der gedrehten 1x2-Vektoren Licht repräsentiert, das im Modus mit schneller Polarisation polarisiert ist, und der andere der gedrehten 1x2-Vektoren Licht repräsentiert, das im Modus mit langsamer Polarisation polarisiert ist;
Speichern eines oder mehrerer Drehwinkel, die dem Drehen der 2x2-Matrix zugeordnet sind, im Speicher; und
Verwenden des einen oder der mehreren Drehwinkel, um das Wellenleitersegment zu charakterisieren.

## Revendications

1. Appareil de réflectométrie dans le domaine fréquentiel optique pour déterminer la biréfringence d'un segment de guide d'ondes à un emplacement particulier le long du guide d'ondes, comprenant :
une source lumineuse destinée à coupler une lumière accordée dans une plage de fréquences et présentant un premier état de polarisation dans le guide d'ondes, et à coupler une lumière accordée dans une plage de fréquences et présentant un second état de polarisation dans le guide d'ondes, le second état de polarisation étant sensiblement orthogonal au premier état de polarisation ;
des circuits de détection optique configurés pour :
détecter des réflexions de rétrodiffusion de Rayleigh dans le premier état de polarisation associées au segment de guide d'ondes et générer des données de rétrodiffusion de Rayleigh dans le premier état de polarisation associées aux réflexions de rétrodiffusion de Rayleigh dans le premier état de polarisation, et
détecter des réflexions de rétrodiffusion de Rayleigh dans le second état de polarisation associées au segment de guide d'ondes et générer des données de rétrodiffusion de Rayleigh dans le second état de polarisation associées aux réflexions de rétrodiffusion de Rayleigh dans le second état de polarisation ;
des circuits de traitement configurés pour :
déterminer une réponse spectrale sur la base des données de rétrodiffusion de Rayleigh dans le premier état de polarisation et des données de rétrodiffusion de Rayleigh dans le second état de polarisation ;
calculer une corrélation sur la base de la réponse spectrale ;
déterminer la biréfringence du segment de guide d'ondes à l'emplacement particulier le long du guide d'ondes sur la base de la corrélation ; et
utiliser la biréfringence déterminée pour caractériser le segment de guide d'ondes ;
l'appareil de réflectométrie dans le domaine fréquentiel optique étant **caractérisé en ce que** les circuits de traitement sont en outre configurés pour :
former une matrice sur la base des données de rétrodiffusion de Rayleigh dans le premier état de polarisation et des données de rétrodiffusion de Rayleigh dans le second état de polarisation, et
calculer une réponse spectrale pour chaque composante de la matrice ;
dans lequel la matrice est une matrice 2x2 ayant deux vecteurs 1x2, et dans lequel les circuits de traitement sont configurés pour :
soumettre à une rotation la matrice 2x2 jusqu'à ce que l'un des vecteurs 1x2 soumis à une rotation représente une lumière polarisée en mode de polarisation rapide et
que l'autre des vecteurs 1x2 soumis à une rotation représente une lumière polarisée en mode de polarisation lente ;
stocker en mémoire un ou plusieurs angles de rotation associés à la rotation de la matrice 2x2 ; et
utiliser le ou les angles de rotation pour caractériser le segment de guide d'ondes.

2. Appareil de réflectométrie dans le domaine fréquentiel optique selon la revendication 1, dans lequel l'appareil optique comprend un réseau d'analyse de vecteur optique comprenant :
un réseau de conditionnement de lancement, couplé à la source lumineuse, comprenant un premier trajet lumineux et un second trajet lumineux, le second trajet lumineux étant retardé par rapport au premier trajet lumineux, et un contrôleur de polarisation pour garantir que la lumière dans le premier trajet lumineux soit sensiblement orthogonale à la lumière dans le second trajet lumineux ; et
un interféromètre de mesure pour combiner la lumière provenant des premier et second trajets dans le réseau de conditionnement de lancement avec la lumière réfléchie provenant du guide d'ondes,
dans lequel les circuits de détection optique comprennent un récepteur à diversité de polarisation, couplé à l'interféromètre de mesure, pour détecter séparément les données de rétrodiffusion de Rayleigh dans le premier état de polarisation et les données de rétrodiffusion de Rayleigh dans le second état de polarisation.

3. Appareil de réflectométrie dans le domaine fréquentiel optique selon la revendication 1, dans lequel la source lumineuse est configurée pour coupler dans le guide d'ondes une lumière dans le premier état de polarisation pendant une première période de temps et pour coupler dans le guide d'ondes une lumière dans le second état de polarisation pendant une seconde période de temps, et
dans lequel l'appareil optique comporte un réseau de réflectomètres à rétrodiffusion optique comprenant :
un contrôleur de polarisation pour commuter entre deux états de lancement à polarisation orthogonale pendant les première et seconde périodes de temps ; et
un interféromètre de mesure pour combiner la lumière provenant du contrôleur de polarisation avec la lumière réfléchie provenant du guide d'ondes,
dans lequel les circuits de détection optique comprennent un récepteur à diversité de polarisation, couplé à l'interféromètre de mesure, pour détecter séparément les données de rétrodiffusion de Rayleigh dans le premier état de polarisation et les données de rétrodiffusion de Rayleigh dans le second état de polarisation.

4. Appareil de réflectométrie dans le domaine fréquentiel optique selon la revendication 1, dans lequel les circuits de traitement sont configurés pour :
combiner ledit vecteur 1x2 soumis à une rotation et l'autre vecteur 1x2 soumis à une rotation pour produire un résultat combiné,
calculer une fonction d'amplitude spectrale rapide et une fonction d'amplitude spectrale lente sur la base du résultat combiné.

5. Appareil de réflectométrie dans le domaine fréquentiel optique selon la revendication 4, dans lequel les circuits de traitement sont configurés pour :
calculer une corrélation croisée entre la fonction d'amplitude spectrale rapide et la fonction d'amplitude spectrale lente ;
déterminer un décalage spectral d'un pic de corrélation croisée par rapport à zéro ; et
déterminer la biréfringence du segment de guide d'ondes à l'emplacement particulier le long du guide d'ondes sur la base du décalage spectral.

6. Appareil de réflectométrie dans le domaine fréquentiel optique selon la revendication 1, dans lequel les circuits de traitement sont configurés pour :
déterminer une valeur de biréfringence pour chacun de multiples segments de guide d'ondes le long du guide d'ondes, et
combiner les valeurs de biréfringence pour les multiples segments de guide d'ondes afin de former une distribution de biréfringence sur la longueur du guide d'ondes.

7. Procédé de réflectométrie dans le domaine fréquentiel optique pour déterminer une biréfringence pour un segment de guide d'ondes à un emplacement particulier le long du guide d'ondes où le guide d'ondes présente un premier indice de réfraction pour un premier état de polarisation et un second indice de réfraction différent pour un second état de polarisation qui est sensiblement orthogonal au premier état de polarisation, le procédé comprenant :
le couplage dans le guide d'ondes d'une lumière accordée dans une plage de fréquences et présentant un premier état de polarisation ;
la détection, au niveau d'un récepteur à diversité de polarisation, de réflexions de rétrodiffusion de Rayleigh dans le premier état de polarisation associées au segment de guide d'ondes ;
la génération de données de rétrodiffusion de Rayleigh dans un premier état de polarisation associées aux réflexions de rétrodiffusion de Rayleigh dans le premier état de polarisation ;
le couplage dans le guide d'ondes d'une lumière accordée dans une plage de fréquences et présentant un second état de polarisation qui est sensiblement orthogonal à la lumière présentant le premier état de polarisation ;
la détection, au niveau d'un récepteur à diversité de polarisation, de réflexions de rétrodiffusion de Rayleigh dans le deuxième état de polarisation associées au segment de guide d'ondes ;
la génération de données de rétrodiffusion de Rayleigh dans le second état de polarisation associées aux réflexions de rétrodiffusion de Rayleigh dans le second état de polarisation ;
la détermination d'une réponse spectrale sur la base des données de rétrodiffusion de Rayleigh dans le premier état de polarisation et des données de rétrodiffusion de Rayleigh dans le second état de polarisation ;
le calcul d'une corrélation sur la base de la réponse spectrale ;
la détermination de la biréfringence du segment de guide d'ondes à l'emplacement particulier le long du guide d'ondes sur la base de la corrélation ; et
l'utilisation de la biréfringence déterminée pour caractériser le segment de guide d'ondes ;
le procédé étant **caractérisé en ce qu'**il comprend en outre :
la formation d'une matrice sur la base des données de rétrodiffusion de Rayleigh dans le premier état de polarisation et des données de rétrodiffusion de Rayleigh dans le second état de polarisation, et
le calcul d'une réponse spectrale pour chaque composante de la matrice ;
dans lequel la matrice est une matrice 2x2 ayant deux vecteurs 1x2, et dans lequel le procédé comprend :
la rotation de la matrice 2x2 jusqu'à ce que l'un des vecteurs 1x2 soumis à une rotation représente une lumière polarisée en mode de polarisation rapide et que l'autre des vecteurs 1x2 soumis à une rotation représente une lumière polarisée en mode de polarisation lente ;
le stockage en mémoire d'un ou plusieurs angles de rotation associés à la rotation de la matrice 2x2 ; et
l'utilisation du ou des angles de rotation pour caractériser le segment de guide d'ondes.
